# EUROPÄISCHE PATENTSCHRIFT

(11) **EP 3 688 940 B1**
(45) Veröffentlichungstag und Bekanntmachung des Hinweises auf die Patenterteilung: **02.03.2022**
(21) Anmeldenummer: 18769138.1
(22) Anmeldetag: 10.09.2018
(51) Int. Cl.: H04L 12/46, H04L 12/40

(54) **VERTEILVORRICHTUNG UND VERFAHREN ZUM VERTEILEN VON DATENSTRÖMEN FÜR EIN STEUERGERÄT FÜR EIN HOCHAUTOMATISIERT FAHRBARES FAHRZEUG**
DISTRIBUTING DEVICE AND METHOD FOR DISTRIBUTING DATA STREAMS FOR A CONTROLLER FOR A VEHICLE WHICH CAN BE DRIVEN IN A HIGHLY AUTOMATED MANNER
DISPOSITIF DE DISTRIBUTION ET PROCÉDÉ DE DISTRIBUTION DE FLUX DE DONNÉES À UN APPAREIL DE COMMANDE POUR UN VÉHICULE ROULANT TRÈS AUTOMATISÉ

(30) Priorität: 26.09.2017 DE 102017217016
(43) Veröffentlichungstag der Anmeldung: 05.08.2020
(73) Patentinhaber: Robert Bosch GmbH, 70442 Stuttgart (DE)
(72) Erfinder: KERSKEN, Ulrich, 31199 Diekholzen (DE); KRAEMER, Florian, 74629 Pfedelbach (DE); SCHITTENHELM, Rainer, 68549 Ilvesheim (DE); KORNHAAS, Robert, 73565 Spraitbach (DE); TOPP, Jaroslaw, 71272 Renningen (DE)
(86) Internationale Anmeldenummer: PCT/EP2018/074289
(87) Internationale Veröffentlichungsnummer: WO 2019/063273

(56) Entgegenhaltungen:
- DE-A1-102016 002 897
- DE-A1-102016 113 845
- US-A1- 2012 105 637

## Beschreibung

### Stand der Technik

Der Ansatz geht aus von einer Vorrichtung oder einem Verfahren nach Gattung der unabhängigen Ansprüche. Gegenstand des vorliegenden Ansatzes ist auch ein Computerprogramm und ein maschinenlesbares Speichermedium.

In derzeitigen Zentralsteuergeräten für sicherheitskritische Anwendungen, auch engl. "Driver Assistance" genannt, für Fahrzeuge werden Kombinationen von einem Mikrocontroller und einem Mikroprozessor eingesetzt. Hier sind noch keine besonderen Vorkehrungen zum Verteilen der Datenströme notwendig, da jede Einheit ihre dedizierte Aufgabe und dedizierte Schnittstellen hat. Selbst bei mehreren Prozessoren gibt es feste Verteilungen der Aufgaben im System. US 2012/105637 A1 offenbart ein System zur Videoverarbeitung in einem Fahrzeug. Dabei werden Daten abhängig von einem Protokoll verteilt. DE 10 2016 002897 A1 offenbart ein System zur Verteilung von Sensordaten. Darin sendet eine Kontrolleinrichtung Sensordaten abhängig von deren Inhalt oder Herkunft an eine oder eine Vielzahl an Verarbeitungseinheiten.

### Offenbarung der Erfindung

Vor diesem Hintergrund werden mit dem hier vorgestellten Ansatz eine Verteilvorrichtung zum Verteilen von Datenströmen für ein Steuergerät für ein hochautomatisiert fahrbares Fahrzeug, ferner ein Verfahren zum Verteilen von Datenströmen für ein Steuergerät für ein hochautomatisiert fahrbares Fahrzeug sowie schließlich ein entsprechendes Computerprogramm und maschinenlesbares Speichermedium gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Verteilvorrichtung möglich.

Die mit dem vorgestellten Ansatz erreichbaren Vorteile bestehen darin, dass durch die hier vorgestellte Verteilvorrichtung auch sehr große Datenströme schnell und effizient ohne Engpässe verteilt und verarbeitet werden können. Dies ist insbesondere für ein Steuergerät für sicherheitskritische Anwendungen in Fahrassistenzsystemen von Fahrzeugen wichtig, um eine Sicherheit von Fahrinsassen des Fahrzeugs zu gewährleisten oder zu erhöhen.

Eine Verteilvorrichtung zum Verteilen von Datenströmen für ein Steuergerät für ein hochautomatisiert fahrbares Fahrzeug weist zumindest eine erste Rechnereinheit und zumindest eine weitere Rechnereinheit auf, die dazu ausgebildet sind, um Sensordatenströme zu verarbeiten. Zudem weist die Verteilvorrichtung eine Verteileinrichtung auf, die dazu ausgebildet ist, um einen ersten Sensordatenstrom zumindest eines ersten Sensors und zumindest einen weiteren Sensordatenstrom zumindest eines weiteren Sensors einzulesen und wahlweise auf die zumindest eine erste Rechnereinheit oder die zumindest eine weitere Rechnereinheit zu verteilen.

Bei der ersten Rechnereinheit und/oder der weiteren Rechnereinheit kann es sich je um einen Prozessor handeln. Die Verteileinrichtung kann als ein sogenannter Switch, beispielsweise ein latenzarmer PCIe-Switch (PCI = Peripheral Component Interconnect) ausgeformt sein, der dazu ausgebildet ist, um den ersten Sensordatenstrom wahlweise auf die erste Rechnereinheit oder die weitere Rechnereinheit und den weiteren Sensordatenstrom wahlweise auf die erste Rechnereinheit oder die weitere Rechnereinheit zu verteilen. Die Verteileinrichtung und die Rechnereinheiten können beispielsweise über einen PCI-Bus miteinander verbunden sein. Unter einer wahlweisen Aufteilung kann verstanden werden, dass ein Sensordatenstrom abhängig von einem aktuellen Zustand der Verteilvorrichtung entweder der ersten oder der weiteren Rechnereinheit zugewiesen werden kann. Beispielsweise kann der Sensordatenstrom abhängig von einer aktuellen Auslastung der einzelnen Rechnereinheiten derjenigen Rechnereinheit zugewiesen werden, die aktuell freie Rechnerkapazität aufweist. Dank einer solchen Verteileinrichtung können die Sensordatenströme auf mehrere Rechnereinheiten aufgeteilt werden, wodurch vorteilhafterweise keine Engpässe entstehen.

Die Verteilvorrichtung kann weiterhin eine erste Kanalisiereinrichtung aufweisen, die dazu ausgebildet ist, um einen Sensor-Rohdatenstrom von zumindest dem ersten Sensor zu dem ersten Sensordatenstrom zu kanalisieren und eine weitere Kanalisiereinrichtung aufweisen, die dazu ausgebildet ist, um einen weiteren Sensor-Rohdatenstrom von zumindest dem weiteren Sensor zu dem weiteren Sensordatenstrom zu kanalisieren. Die Kanalisiereinrichtungen können jeweils mittels PCI mit der Verteileinrichtung gekoppelt sein und beispielsweise als programmierbare FPGAs ausgeformt sein, um eine Vielzahl von Datenströmen kanalisieren zu können. Durch die Kanalisiereinrichtungen können die Schnittstellen der Verteileinrichtung geringgehalten werden.

Indem die Verteilvorrichtung außerdem zumindest eine Verbindungseinrichtung aufweist, die dazu ausgebildet ist, um die erste Rechnereinheit und/oder die weitere Rechnereinheit mit zumindest einer Fahrzeugeinrichtung und/oder zumindest einer Weiterverarbeitungsvorrichtung zu verbinden, kann dies ermöglichen, dass durch die verarbeiteten Datenströme etwas in dem Fahrzeug bewirkt oder gesteuert wird und/oder es kann beispielsweise eine kaskadierte Weiterverarbeitung der verarbeiteten Datenströme in der Weiterverarbeitungsvorrichtung erfolgen. Somit kann ein verarbeiteter Datenstrom beispielsweise ein Steuersignal für einen Aktor des Fahrzeugs umfassen. Um sehr viele verarbeitete Datenströme schnell zu übermitteln, kann die Verbindungseinrichtung zumindest eine Ethernet-Schnittstelle und/oder ein Ethernet-Kabel umfassen.

Gemäß einer vorteilhaften Ausführungsform des hier vorgestellten Ansatzes kann die Verteilvorrichtung auch die Fahrzeugeinrichtung und/oder die Weiterverarbeitungsvorrichtung aufweisen. Bei der Fahrzeugeinrichtung kann es sich um einen Aktor handeln. Bei der Weiterverarbeitungsvorrichtung kann es sich um eine zusätzliche Rechnereinheit handeln, die dazu ausgebildet sein kann, um die durch die erste Rechnereinheit oder die zumindest eine weitere Rechnereinheit verarbeiteten Datenströme einzulesen, abermals zu verarbeiten und für die Fahrzeugeinrichtung oder eine weitere Fahrzeugeinrichtung bereitzustellen. Die Fahrzeugeinrichtung und/oder die weitere Fahrzeugeinrichtung kann beispielsweise eine Auslöseeinrichtung für ein Personenschutzsystem umfassen. Diese Auslöseeinrichtung kann durch die hier vorgestellte Verteilvorrichtung ein besonders schnelles Auslösen eines Personenschutzmittels wie eines Airbags bewirken.

Die Verteilvorrichtung kann auch den ersten Sensor und den weiteren Sensor aufweisen. Der erste Sensor kann beispielsweise eine

Umfelderfassungseinrichtung und der weitere Sensor ein Beschleunigungssensor sein.

Ein Verfahren zum Verteilen von Datenströmen für ein Steuergerät für ein hochautomatisiert fahrbares Fahrzeug wird auch hiermit offenbart.

Dieses Verfahren kann beispielsweise in Software oder Hardware oder in einer Mischform aus Software und Hardware beispielsweise in einem Steuergerät, beispielsweise der zuvor vorgestellten Verteilvorrichtung, implementiert sein. Auch durch ein solches Verfahren kann die dem Ansatz zugrundeliegende Aufgabe schnell und effizient gelöst werden.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 ein Blockschaltbild einer Verteilvorrichtung zum Verteilen von Datenströmen für ein Steuergerät für ein hochautomatisiert fahrbares Fahrzeug gemäß einem Ausführungsbeispiel;
Fig. 2 ein Blockschaltbild einer Verteilvorrichtung mit einer Weiterverarbeitungsvorrichtung gemäß einem Ausführungsbeispiel; und
Fig. 3 ein Ablaufdiagramm eines Verfahrens zum Verteilen von Datenströmen für ein Steuergerät für ein hochautomatisiert fahrbares Fahrzeug gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

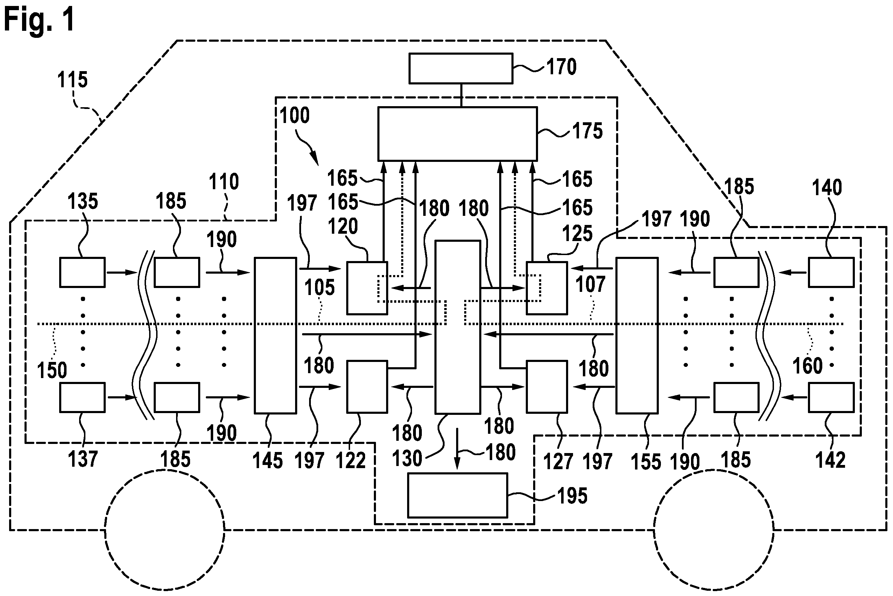

Fig. 1 zeigt ein Blockschaltbild einer Verteilvorrichtung 100 zum Verteilen von Datenströmen 105, 107 für ein Steuergerät 110 für ein hochautomatisiert fahrbares Fahrzeug 115 gemäß einem Ausführungsbeispiel.

Die Verteilvorrichtung 100 ist dazu ausgebildet, um die Datenströme 105, 107 in dem Steuergerät 110 des hier gezeigten hochautomatisiert fahrbaren Fahrzeugs 115 zu verteilen. Die Verteilvorrichtung 100 ist gemäß diesem Ausführungsbeispiel in dem Steuergerät 110 aufgenommen, welches wiederum in dem Fahrzeug 115 aufgenommen ist. Zum Verteilen der Datenströme 105, 107 weist die Verteilvorrichtung 100 zumindest eine erste Rechnereinheit 120, 122 und zumindest eine weitere Rechnereinheit 125, 127 auf, die dazu ausgebildet sind, um Sensordatenströme 105, 107 zu verarbeiten. Zudem weist die Verteilvorrichtung 100 eine Verteileinrichtung 130 auf, die dazu ausgebildet ist, um einen ersten Sensordatenstrom 105 zumindest eines ersten Sensors 135, 137 und zumindest einen weiteren Sensordatenstrom 107 zumindest eines weiteren Sensors 140, 142 einzulesen und wahlweise auf die zumindest eine erste Rechnereinheit 120, 122 oder die zumindest eine weitere Rechnereinheit 125, 127 zu verteilen. Gemäß diesem Ausführungsbeispiel ist der erste Sensordatenstrom 105 auf die erste Rechnereinheit 120 und der weitere Sensordatenstrom 107 auf die weitere Rechnereinheit 125 verteilt worden. Alle oder einige der Sensoren 135, 137, 140, 142 können je nach Ausführungsbeispiel innerhalb oder außerhalb des Steuergeräts 110 angeordnet sein.

Die Verteilvorrichtung 100 weist gemäß diesem Ausführungsbeispiel eine Mehrzahl, hier beispielhaft vier Rechnereinheiten 120, 122, 125, 127 auf. Außerdem weist die Verteilvorrichtung 100 gemäß diesem Ausführungsbeispiel eine Mehrzahl von Kanalisiereinrichtungen 145, 155 auf, die zwischen die Verteileinrichtung 130 und die Sensoren 135, 137, 140, 142 geschaltet sind. Beispielhaft ist eine erste Kanalisiereinrichtung 145 dazu ausgebildet, um einen Sensor-Rohdatenstrom 150 von den ersten Sensoren 135, 137 zu dem ersten Sensordatenstrom 105 zu kanalisieren. Eine weitere Kanalisiereinrichtung 155 ist entsprechend dazu ausgebildet, um weitere Sensor-Rohdatenströme 160 weiterer Sensoren 140, 142 zu dem weiteren Sensordatenstrom 107 zu kanalisieren. Somit ist jede der Kanalisiereinrichtungen 145, 155 ausgebildet, um eine Mehrzahl von Sensor-Rohdatenströmen einer Mehrzahl von Sensoren zu einem Sensordatenstrom zu kanalisieren.

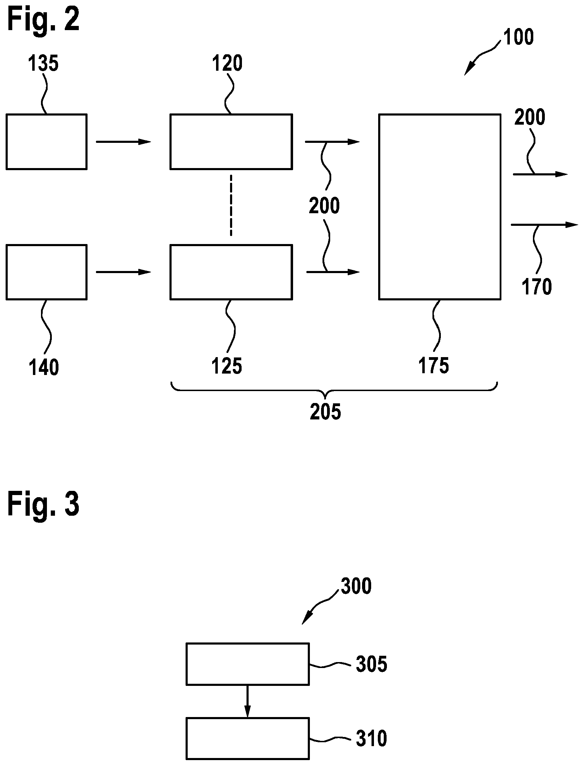

Außerdem weist die Verteilvorrichtung 100 gemäß diesem Ausführungsbeispiel zumindest eine Verbindungseinrichtung 165, beispielsweise eine Schnittstelle, auf, die dazu ausgebildet ist, um die erste Rechnereinheit 120 und/oder die weitere Rechnereinheit 125 mit zumindest einer Fahrzeugeinrichtung 170 und/oder zumindest einer Weiterverarbeitungsvorrichtung 175 zu verbinden. Gemäß diesem Ausführungsbeispiel ist die Weiterverarbeitungsvorrichtung 175 Teil der Verteilvorrichtung 100. Die Weiterverarbeitungsvorrichtung 175 wird in Fig. 2 genauer beschrieben. Die Fahrzeugeinrichtung 170 ist beispielsweise ein Aktor des Fahrzeugs 115 und umfasst beispielhaft zumindest eine Auslöseeinrichtung für ein Personenschutzsystem.

Der erste Sensor 135 ist beispielhaft als eine Umfelderfassungseinrichtung und der weitere Sensor 140 beispielhaft als ein Beschleunigungssensor ausgeformt.

Zwischen den Sensoren 135, 137 und der ersten Kanalisiereinrichtung 145 ist gemäß diesem Ausführungsbeispiel je ein Medienkonverter 185 geschaltet. Auch zwischen den weiteren Sensoren 140, 142 und der weiteren Kanalisiereinrichtung 155 ist jeweils ein Medienkonverter 185 angeordnet. Zwischen den Medienkonvertern 185 und den Kanalisiereinrichtungen 145, 155 werden die Sensor-Rohdatenströme 150, 160 in Form von Signalen 190 gemäß diesem Ausführungsbeispiel mittels 10G-Ethernet oder gemäß einem alternativen Ausführungsbeispiel mittels LVDS (Low Voltage Differential Signaling) übermittelt. Die Verteileinrichtung 130 ist gemäß einem Ausführungsbeispiel außerdem mit einer Messtechnikeinrichtung 195 gekoppelt.

Im Folgenden werden Details der Verteilvorrichtung 100 noch einmal genauer beschrieben:
Die hier vorgestellte Verteilvorrichtung 100 repräsentiert eine effektive Vernetzungsstruktur in einem Steuergerät 110, beispielsweise einem Zentralsteuergerät für automatisiertes Fahren.

Bei Zentralsteuergeräten für vollautomatisiertes oder hochautomatisiertes Fahren sind Anforderungen an einen Datendurchsatz und eine Rechenleistung so groß, dass bei bekannten Zentralsteuergeräten auf ein Cluster von, auf verschiedene Aufgaben spezialisierte, Rechner zurückgegriffen werden muss. Um einen Ablauf und eine Verteilung möglichst effizient zu gestalten, wird durch die hier vorgestellte Verteilvorrichtung 100 nun vorteilhafterweise eine Vernetzungsstruktur gefunden, bei der ein Datenfluss möglichst von anderen Prozessen unabhängig, kreuzungsfrei und auf unterschiedlichen Medien verteilt abläuft. Ein Ziel für eine gute Struktur ist es dabei, Bottlenecks, d. h. Engpässe, zu verhindern, da auch nur ein Bottleneck im System die Struktur und Gesamtperformance zerstören kann. Durch die hier vorgestellte Verteilvorrichtung 100 werden derartige Engpässe vorteilhafterweise vermieden. Es bietet sich nun vorteilhafterweise im Automobilbereich die Möglichkeit, die geforderten Datenmengen zu verarbeiten.

Durch die Verteilvorrichtung 100 wird eine Etablierung einer effizienten Datenkommunikationsstruktur in Zentralsteuergeräten ermöglicht, um Rohdaten zu verteilen und auch eine parallele Verarbeitung der Daten auf mehreren gekoppelten Rechnereinheiten 120, 125 zu ermöglichen. Ein Hauptmerkmal dabei ist eine Verteilung der unterschiedlich weit verarbeiteten Datenströme 105, 107 auf unterschiedliche Datenpfade/Übertragungsmedien.

Konkret heißt dies: In das System der Verteilvorrichtung 100 werden Sensor-Rohdaten in Form des Sensor-Rohdatenstroms 150 und des weiteren Sensor-Rohdatenstroms 160, hier links und rechts zu sehen, jeweils über ein programmierbares Bauteil in Form der Kanalisiereinrichtungen 145, 155, in diesem Fall jeweils ein FPGA, kanalisiert und über einen zentralen, latenzarmen, PCIe-Switch in Form der Verteileinrichtung 130 auf die zur Verarbeitung der Daten bereitstehenden Rechnereinheiten 120, 122, 125, 127 beliebig verteilt. Nach einer Verarbeitung in den Rechnereinheiten 120, 122, 125, 127 werden die vorverarbeiteten Daten über Verbindungseinrichtungen 165, hier mittels Ethernet, an die nächsten Einheiten, hier die Weiterverarbeitungsvorrichtung 175, weiterverteilt. Dieses System kann sowohl mit einer Box, als auch kaskadiert mit der gezeigten Weiterverarbeitungsvorrichtung 175 verwendet werden, gemäß diesem Ausführungsbeispiel sind hierzu die Datenausgänge der Vorverarbeitungsboxen in Form der Rechnereinheiten 120, 125 mit Sensoreingängen einer weiteren Box in Form der Weiterverarbeitungsvorrichtung 175 verbunden, in der eine weitere Verarbeitung stattfindet. Dies ist in Fig. 2 noch einmal genauer gezeigt. Über das ganze System in Form der Verteilvorrichtung 100 ist so ein linearer Datenfluss gewährleistet.

Gemäß diesem Ausführungsbeispiel werden die Datenströme 105, 107 mittels PCle 180 auf die Rechnereinheiten 120, 122, 125, 127 verteilt. Gemäß einem alternativen Ausführungsbeispiel ist auf andere physikalische Schnittstellen gewechselt, um die Datenströme 105, 107 mittels Ethernet und/oder Aurora und/oder LVDS auf mehrere Rechner zu verteilen. Gemäß einem alternativen Ausführungsbeispiel können die Rohdatenströme 150, 160 oder die Datenströme 105, 107 zumindest teilweise mit Punkt-zu-Punkt-Verbindungen, hier als MIPI-CSI-Verbindungen 197 ausgeformt, an dedizierte Rechnereinrichtungen 120, 122, 125, 127 gesendet werden, wobei eine Verteilung der Daten auf mehrere Rechner nicht oder nur sehr schwer möglich ist. Gemäß einem alternativen Ausführungsbeispiel wird auf die gerichteten und getrennten Datenpfade verzichtet und die Daten werden alle über eine zentralisierte Verteilinstanz laufen gelassen.

Ein Datenfluss in der Verteilvorrichtung 100 ist gegenüber einer nicht gerichteten Datenflussstruktur verbessert, wodurch Ausführungszeiten vorteilhafterweise reduziert sind. Die hier vorgestellte Verteilvorrichtung 100 wird somit gestiegenen Datendurchsatzforderungen im Automobilbereich, insbesondere für Fahrassistenzsysteme, gerecht.

Fig. 2 zeigt ein Blockschaltbild einer Verteilvorrichtung 100 mit einer Weiterverarbeitungsvorrichtung 175 gemäß einem Ausführungsbeispiel. Dabei kann es sich um die anhand von Figur 1 beschriebene Verteilvorrichtung 100 handeln. Die Rechnereinheiten 120, 125 sind mittels Ethernet 200 mit der Weiterverarbeitungsvorrichtung 175 verbunden. Gemäß einem alternativen Ausführungsbeispiel sind die Anwendungen der Rechnereinheiten 120, 125 und der Weiterverarbeitungsvorrichtung 175 einer gleichen Box 205 zugeordnet.

Fig. 3 zeigt ein Ablaufdiagramm eines Verfahrens 300 zum Verteilen von Datenströmen für ein Steuergerät für ein hochautomatisiert fahrbares Fahrzeug gemäß einem Ausführungsbeispiel. Dabei kann es sich um ein Verfahren 300 handeln, das von einer der anhand einer der vorangegangenen Figuren beschriebenen Verteilvorrichtungen ausführbar ist.

Das Verfahren 300 weist zumindest einen Schritt 305 des Einlesens und wahlweisen Verteilens und einen Schritt 310 des Verarbeitens auf.

Im Schritt 305 des Einlesens und wahlweisen Verteilens werden zumindest ein erster Sensordatenstrom zumindest eines ersten Sensors und zumindest ein weiterer Sensordatenstrom zumindest eines weiteren Sensors eingelesen und wahlweise auf zumindest eine erste Rechnereinheit oder eine weitere Rechnereinheit verteilt. Im Schritt 310 des Verarbeitens werden die Sensordatenströme verarbeitet.

Die hier vorgestellten Verfahrensschritte können wiederholt sowie in einer anderen als in der beschriebenen Reihenfolge ausgeführt werden.

## Patentansprüche

1. Verteilvorrichtung (100) zum Verteilen von Datenströmen (105, 107) für ein Steuergerät (110) für ein hochautomatisiert fahrbares Fahrzeug (115), wobei die Verteilvorrichtung (100) zumindest die folgenden Merkmale aufweist:
zumindest eine erste Rechnereinheit (120, 122) und zumindest eine weitere Rechnereinheit (125, 127), die dazu ausgebildet sind, um Sensordatenströme (105, 107) zu verarbeiten;
eine Verteileinrichtung (130), die dazu ausgebildet ist, um einen ersten Sensordatenstrom (105) zumindest eines ersten Sensors (135, 137) und zumindest einen weiteren Sensordatenstrom (107) zumindest eines weiteren Sensors (140, 142) einzulesen und abhängig von einer aktuellen Auslastung der einzelnen Rechnereinheiten (120, 122, 125, 127) wahlweise auf die zumindest eine erste Rechnereinheit (120, 122) oder die zumindest eine weitere Rechnereinheit (125, 127) zu verteilen; und
zumindest einer Verbindungseinrichtung (165), die dazu ausgebildet ist, um die erste Rechnereinheit (120, 122) und die weitere Rechnereinheit (125, 127) mit zumindest einer Fahrzeugeinrichtung (170) und/oder zumindest einer Weiterverarbeitungsvorrichtung (175) zu verbinden..

2. Verteilvorrichtung (100) gemäß Anspruch 1, mit einer ersten Kanalisiereinrichtung (145), die dazu ausgebildet ist, um einen Sensor-Rohdatenstrom (150) von dem zumindest einen ersten Sensor (135, 137) zu dem ersten Sensordatenstrom (105) zu kanalisieren und eine weitere Kanalisiereinrichtung (155), die dazu ausgebildet ist, um einen weiteren Sensor-Rohdatenstrom (160) von dem zumindest einen weiteren Sensor (140, 142) zu dem weiteren Sensordatenstrom (107) zu kanalisieren.

3. Verteilvorrichtung (100) gemäß einem der vorangegangenen Ansprüche, mit der Fahrzeugeinrichtung (170) und/oder der Weiterverarbeitungsvorrichtung (175).

4. Verteilvorrichtung (100) gemäß einem der vorangegangenen Ansprüche, bei der die Fahrzeugeinrichtung (170) eine Auslöseeinrichtung für ein Personenschutzsystem umfasst.

5. Verteilvorrichtung (100) gemäß einem der vorangegangenen Ansprüche, mit dem zumindest einen ersten Sensor (135, 137) und dem zumindest einen weiteren Sensor (140, 142).

6. Verteilvorrichtung (100) gemäß Anspruch 5, bei der der zumindest eine erste Sensor (135, 137) eine Umfelderfassungseinrichtung und der zumindest eine weitere Sensor (140, 142) ein Beschleunigungssensor ist.

7. Verfahren (300) zum Verteilen von Datenströmen (105, 107) für ein Steuergerät (110) für ein hochautomatisiert fahrbares Fahrzeug (115), wobei das Verfahren (300) zumindest die folgenden Schritte umfasst:
Einlesen und wahlweises Verteilen (305) zumindest eines ersten Sensordatenstroms (105) zumindest eines ersten Sensors (135, 137) und zumindest eines weiteren Sensordatenstroms (107) zumindest eines weiteren Sensors (140, 142) auf zumindest eine erste Rechnereinheit (120, 122) oder eine weitere Rechnereinheit (125, 127), wobei das wahlweise Verteilen abhängig von einer aktuellen Auslastung der einzelnen Rechnereinheiten (120, 122, 125, 127) erfolgt;
Verarbeiten (310) der Sensordatenströme (105, 107); und
Verbinden der ersten Rechnereinheit (120, 122) und der weiteren Rechnereinheit (125, 127) mit zumindest einer Fahrzeugeinrichtung (170) und/oder zumindest einer Weiterverarbeitungsvorrichtung (175).

8. Computerprogramm, das dazu eingerichtet ist, das Verfahren (300) gemäß Anspruch 7 auszuführen.

9. Maschinenlesbares Speichermedium, auf dem das Computerprogramm nach Anspruch 8 gespeichert ist.

## Claims

1. Distribution apparatus (100) for distributing data streams (105, 107) for a control unit (110) for a vehicle (115) that can be driven in a highly automated manner, wherein the distribution apparatus (100) has at least the following features:
at least one first computer unit (120, 122) and at least one further computer unit (125, 127), which are designed to process sensor data streams (105, 107);
a distribution device (130), which is designed to read in a first sensor data stream (105) from at least one first sensor (135, 137) and at least one further sensor data stream (107) from at least one further sensor (140, 142) and to take a current workload of the individual computer units (120, 122, 125, 127) as a basis for selectively distributing said sensor data streams to the at least one first computer unit (120, 122) or the at least one further computer unit (125, 127); and
at least one connecting device (165), which is designed to connect the first computer unit (120, 122) and the further computer unit (125, 127) to at least one vehicle device (170) and/or at least one further processing apparatus (175).

2. Distribution apparatus (100) according to Claim 1, having a first channelling device (145), which is designed to channel a sensor raw data stream (150) from the at least one first sensor (135, 137) to the first sensor data stream (105) and a further channelling device (155), which is designed to channel a further sensor raw data stream (160) from the at least one further sensor (140, 142) to the further sensor data stream (107).

3. Distribution apparatus (100) according to either of the preceding claims, having the vehicle device (170) and/or the further processing apparatus (175).

4. Distribution apparatus (100) according to one of the preceding claims, in which the vehicle device (170) comprises a tripping device for a person protection system.

5. Distribution apparatus (100) according to one of the preceding claims, having the at least one first sensor (135, 137) and the at least one further sensor (140, 142).

6. Distribution apparatus (100) according to Claim 5, in which the at least one first sensor (135, 137) is an environment detection device and the at least one further sensor (140, 142) is an acceleration sensor.

7. Method (300) for distributing data streams (105, 107) for a control unit (110) for a vehicle (115) that can be driven in a highly automated manner, wherein the method (300) comprises at least the following steps:
reading in and selectively distributing (305) at least one first sensor data stream (105) from at least one first sensor (135, 137) and at least one further sensor data stream (107) from at least one further sensor (140, 142) to at least one first computer unit (120, 122) or a further computer unit (125, 127), wherein the selective distribution takes place on the basis of a current workload of the individual computer units (120, 122, 125, 127);
processing (310) the sensor data streams (105, 107); and
connecting the first computer unit (120, 122) and the further computer unit (125, 127) to at least one vehicle device (170) and/or at least one further processing apparatus (175).

8. Computer program configured to carry out the method (300) according to Claim 7.

9. Machine-readable storage medium on which the computer program according to Claim 8 is stored.

## Revendications

1. Dispositif de répartition (100) permettant de répartir des flux de données (105, 107) pour un appareil de commande (110) destiné à un véhicule à conduite hautement automatisée (115), le dispositif de répartition (100) présentant au moins les particularités suivantes :
au moins une première unité de calcul (120, 122) et au moins une autre unité de calcul (125, 127) qui sont réalisées pour traiter des flux de données de capteur (105, 107) ;
un équipement de répartition (130) qui est réalisé pour lire un premier flux de données de capteur (105) d'au moins un premier capteur (135, 137) et au moins un autre flux de données de capteur (107) d'au moins un autre capteur (140, 142), et pour les répartir en fonction d'un taux d'utilisation actuel des unités de calcul individuelles (120, 122, 125, 127) sélectivement sur ladite au moins une première unité de calcul (120, 122) ou ladite au moins une autre unité de calcul (125, 127) ; et
au moins un équipement de liaison (165) qui est réalisé pour relier la première unité de calcul (120, 122) et l'autre unité de calcul (125, 127) à au moins un équipement de véhicule (170) et/ou à au moins un dispositif de traitement ultérieur (175).

2. Dispositif de répartition (100) selon la revendication 1, comprenant un premier équipement de canalisation (145) qui est réalisé pour canaliser un flux de données brutes de capteur (150) de l'au moins un premier capteur (135, 137) au premier flux de données de capteur (105), et un autre équipement de canalisation (155) qui est réalisé pour canaliser un autre flux de données brutes de capteur (160) de l'au moins un autre capteur (140, 142) audit autre flux de données de capteur (107).

3. Dispositif de répartition (100) selon l'une quelconque des revendications précédentes, comprenant l'équipement de véhicule (170) et/ou le dispositif de traitement ultérieur (175).

4. Dispositif de répartition (100) selon l'une quelconque des revendications précédentes, dans lequel l'équipement de véhicule (170) comprend un équipement de déclenchement pour un système de protection personnelle.

5. Dispositif de répartition (100) selon l'une quelconque des revendications précédentes, comprenant ledit au moins un premier capteur (135, 137) et ledit au moins un autre capteur (140, 142).

6. Dispositif de répartition (100) selon la revendication 5, dans lequel ledit au moins un premier capteur (135, 137) est un équipement de détection d'environnement et ledit au moins un autre capteur (140, 142) est un capteur d'accélération.

7. Procédé (300) permettant de répartir des flux de données (105, 107) pour un appareil de commande (110) destiné à un véhicule à conduite hautement automatisée (115), le procédé (300) comprenant au moins les étapes suivantes consistant à :
lire et répartir sélectivement (305) au moins un premier flux de données de capteur (105) d'au moins un premier capteur (135, 137) et au moins un autre flux de données de capteurs (107) d'au moins un autre capteur (140, 142) sur au moins une première unité de calcul (120, 122) ou une autre unité de calcul (125, 127), la répartition sélective étant effectuée en fonction d'un taux d'utilisation actuel des unités de calcul individuelles (120, 122, 125, 127) ;
traiter (310) les flux de données de capteur (105, 107) ; et
relier la première unité de calcul (120, 122) et l'autre unité de calcul (125, 127) à au moins un équipement de véhicule (170) et/ou à au moins un dispositif de traitement ultérieur (175).

8. Programme informatique qui est aménagé pour exécuter le procédé (300) selon la revendication 7.

9. Support de stockage lisible par machine sur lequel est stocké le programme informatique selon la revendication 8.
